# EUROPEAN PATENT APPLICATION

(11) **EP 3 480 131 A1**
(43) Date of publication of application: **08.05.2019**
(21) Application number: 17897563.7
(22) Date of filing: 27.02.2017
(51) Int. Cl.: B65D 81/18

(54) **TEMPERATURE CONTROL CASE**

(71) Applicant: Tanabe, Koji, Palo Alto, CA 94303 (US); I Peace, Inc., Palo Alto, CA 94303 (US)
(72) Inventor: TANABE, Koji, Palo Alto, California 94304 (US); HIRAIDE, Ryoji, Kyoto-shi Kyoto 606-8414 (JP)
(74) Representative: MacLean, Martin Robert
(86) International application number: PCT/JP2017/007556
(87) International publication number: WO 2018/154785

(57) **Abstract**

A temperature control case comprising an outer case 1, a heat-insulating material 2 disposed inside the outer case 1, and a heat storage material 3 disposed inside the heat-insulating material 2, the heat storage material 3 having a container 4 disposed inside it.

## Description

### TECHNICAL FIELD

The present invention relates to temperature control technology, and particularly to a temperature control case.

### BACKGROUND ART

Embryonic stem cells (ES cells) are stem cells established from early embryos of human or mice. ES cells are pluripotent, being capable of differentiating into all cells in the body. At the current time, human ES cells are usable in cell transplantation therapy for numerous diseases including Parkinson's disease, juvenile onset diabetes and leukemia. However, certain barriers exist against transplantation of ES cells. In particular, transplantation of ES cells can provoke immunorejection similar to the rejection encountered after unsuccessful organ transplantation. Moreover, there are many ethical considerations as well as critical and dissenting opinions against the use of ES cell lines that have been established by destruction of human embryos.

It was against this background that Professor Shinya Yamanaka of Kyoto University was successful in establishing induced pluripotent stem cells (iPS cells) by transferring four genes: Oct3/4, Klf4, c-Myc and Sox2, into somatic cells. For this, Professor Yamanaka received the Nobel Prize in Physiology or Medicine in 2012 (see PTL 1, for example). iPS cells are ideal pluripotent cells which are free of the issues of rejection or ethical problems. Therefore, iPS cells are considered promising for use in cell transplantation therapy.

For cell transplantation therapy it is necessary, for example, to transport cells from a cell bank to the hospital where the patient has been admitted. During transport of the cells, the cells are cryopreserved in dry ice or liquid nitrogen. The cryopreserved cells are transported while being accommodated together with liquid nitrogen in a transport case known as a "dry shipper". Transport of liquid nitrogen, however, is dangerous. Moreover, dry shippers in which the liquid nitrogen is accommodated are large and have high production cost.

### [CITATION LIST]

### [PATENT LITERATURE]

PTL 1: Japanese Patent Publication No. 4183742

### SUMMARY OF INVENTION

### [TECHNICAL PROBLEM]

There is a demand for means capable of low-cost temperature control of substances including, but not limited to, cells. It is an object of the present invention to provide a temperature control case which allows temperature control of substances at low cost.

### [SOLUTION TO PROBLEM]

According to an aspect of the invention there is provided a temperature control case comprising an outer case, a heat-insulating material disposed inside the outer case, and a heat storage material disposed inside the heat-insulating material, the heat storage material having a container disposed inside it.

The temperature control case may further comprise an inner case disposed between the outer case and the heat-insulating material.

The heat storage material in the temperature control case may also include a latent heat storage material.

The heat storage material in the temperature control case may also include a substance that undergoes electronic phase transition.

The heat storage material in the temperature control case may also include a vanadium dioxide-based substance.

The heat storage material in the temperature control case may also include one or more substances selected from the group consisting of V_{(i-X)}W_{X}O₂ (0 ≤ X ≤ 0.0650), V_{(1-X)}Ta_{X}O₂ (0 ≤ X ≤ 0.117), V_{(i-X)}Nb_{X}O₂ (0 ≤ X ≤ 0.115), V_{(1-X)}Ru_{X}O₂ (0 ≤ X ≤ 0.150), V_{(1-X)}Mo_{X}O₂ (0 ≤ X ≤ 0.161), V_{(1-X)}Re_{X}O₂ (0 ≤ X ≤ 0.0964), LiMn₂O₄, LiVS₂, LiVO₂, NaNiO₂, LiRh₂O₄, V₂O₃, V₄O₇, VₑO₁₁, Ti₄O₇, SmBaFe₂O₅, EuBaFe₂O₅, GdBaFe₂O₅, TbBaFe₂O₅, DyBaFe₂O₅, HoBaFe₂O₅, YBaFe₂O₅, PrBaCo₂O_{5.5}, DyBaCo₂O_{5.54}, HoBaCo₂O_{5.48} and YBaCo₂O_{5.49}.

The temperature control case may further comprise a lid that seals shut the interior of the outer case.

The temperature control case may further comprise a lock mechanism that prevents opening of the lid.

The temperature control case may still further comprise an input device for unlocking of the lock mechanism.

The temperature control case may be further provided with suction holes for creation of a vacuum around the periphery of the heat storage material.

The temperature control case may be further provided with a temperature sensor that measures the temperature around the periphery of the heat storage material.

The temperature control case may still further comprise a display device that displays the temperature.

The temperature control case may still further comprise a display device that displays a timer.

The temperature control case may still further comprise a display device that displays the storage life.

The temperature control case may still further comprise a position sensor.

The temperature control case may still further comprise a motion sensor.

The temperature control case may have cells stored inside the container.

The temperature control case may also have stem cells stored inside the container.

According to another aspect of the invention there is provided a stem cell production system comprising a preintroduction cell solution-feeding channel through which a cell-containing solution passes, a factor introducing device that is connected to the preintroduction cell solution-feeding channel and introduces a pluripotency inducing factor into cells to prepare inducing factor-introduced cells, a cell mass preparation device that cultures the inducing factor-introduced cells to prepare a plurality of cell masses composed of stem cells, and a packaging apparatus that introduces the cell masses into the temperature control case.

According to another aspect of the invention there is provided a somatic cell production system comprising a preintroduction cell solution-feeding channel through which a cell-containing solution passes, a factor introducing device that is connected to the preintroduction cell solution-feeding channel and introduces a somatic cell inducing factor into cells to prepare inducing factor-introduced cells, a cell preparation device that cultures the inducing factor-introduced cells to prepare somatic cells, and a packaging apparatus that introduces the somatic cells into the temperature control case.

### [ADVANTAGEOUS EFFECTS OF INVENTION]

According to the invention it is possible to provide a temperature control case that allows temperature control of substances at low cost.

### BRIEF DESCRIPTION OF DRAWINGS

Fig. 1 is a perspective view of a temperature control case according to an embodiment.
Fig. 2 is a side view of a temperature control case according to an embodiment.
Fig. 3 is a perspective view of a temperature control case according to an embodiment.
Fig. 4 is a sectional perspective view of a temperature control case according to an embodiment.
Fig. 5 is a cross-sectional view of a temperature control case according to an embodiment.
Fig. 6 is a schematic view of a stem cell production system according to an embodiment.

### DESCRIPTION OF EMBODIMENTS

An embodiment of the invention will now be explained. In the accompanying drawings, identical or similar parts will be indicated by identical or similar reference numerals. However, the drawings are only schematic representations. The specific dimensions, therefore, should be judged in light of the following explanation. Furthermore, this naturally includes parts that have different dimensional relationships and proportions between drawings.

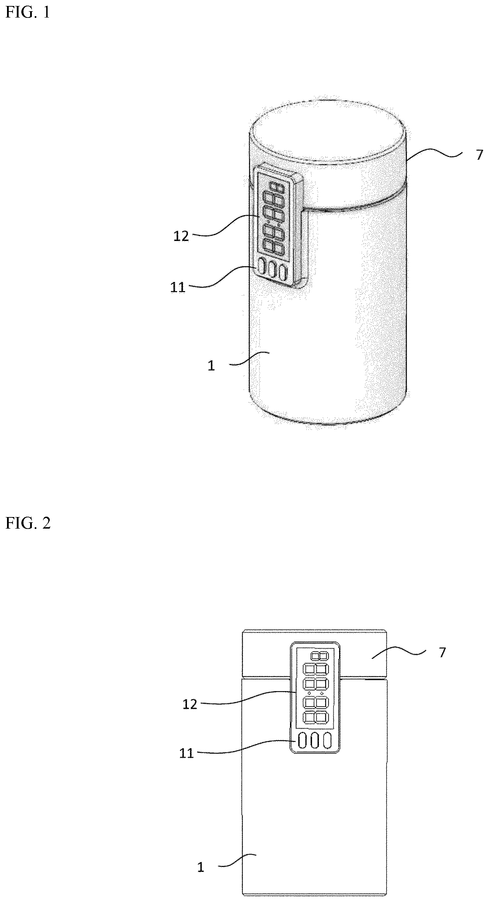

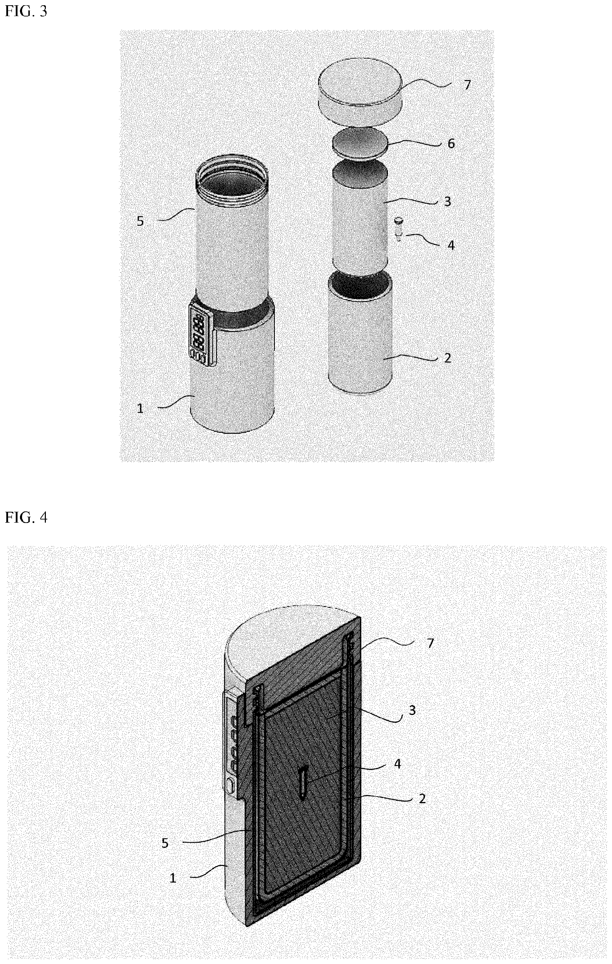

As shown in Fig. 1 to Fig. 5, the temperature control case according to this embodiment comprises an outer case 1, a heat-insulating material 2 disposed inside the outer case 1, and a heat storage material 3 disposed inside the heat-insulating material 2, the heat storage material 3 having a container 4 disposed inside it. The temperature control case is used to control the temperature of the contents of the container 4. Alternatively, the temperature control case may be used for transport while controlling the temperature of the contents of the container 4.

The outer case 1 is tubular with a bottom, for example. The outer case 1 has a vacuum cavity in the interior. The outer case 1 is made of a metal such as stainless steel, or of glass, for example. The outer case 1 may internally comprise a reflector material to reflect heat. The reflector material is made of copper, for example. An inner case 5 is disposed between the outer case 1 and the heat-insulating material 2. The inner case 5 is tubular with a bottom, for example.

The heat-insulating material 2 is tubular with a bottom, for example. The heat-insulating material 2 is composed of glass wool, rock wool, a urethane-based resin or a phenol-based resin, for example. The heat storage material 3 is a powder or solid, for example, filled into the heat-insulating material 2 that is tubular with a bottom. The heat storage material 3 may also be a sintered material. The heat storage material 3 maintains a constant temperature. The temperature maintained by the heat storage material 3 may be either a low temperature or a high temperature. The heat storage material 3 may also be used repeatedly. The heat storage material 3 is a mixture of an absorbent polymer and calcium chloride (CaCl₂), for example.

Alternatively, the heat storage material 3 may be a latent heat storage material, for example.

The heat storage material 3 is made of, for example, a substance that undergoes electronic phase transition (see Japanese Unexamined Patent Publication No. 2015-71795 as an example). Examples of substances that undergo electronic phase transition include vanadium dioxide-based substances. An example of a vanadium dioxide-based substance is vanadium dioxide (VO₂). Another example of a vanadium dioxide-based substance is V_{(i-X)}W_{X}O₂ (0 ≤ X ≤ 0.0650), having a portion of the vanadium (V) in vanadium dioxide (VO₂) replaced by tungsten (W). By replacing a portion of the vanadium (V) in vanadium dioxide (VO₂) with another element, it is possible to control the temperature that is maintained by the heat storage material 3. The maintained temperature can therefore be selected as desired by exchanging the heat storage material 3.

Examples of vanadium dioxide-based substances include V_{(i-X)}Nb_{X}O₂ (0 ≤ X ≤ 0.115), V_{(1-X})Ru_{X}O₂ (0 ≤ X ≤ 0.150), V_{(1-X)}MO_{X}O₂ (0 ≤ X ≤ 0.161), V_{(1-X)}Re_{X}O₂ (0 ≤ X ≤ 0.0964), LiMn₂O₄, LiVS₂, LiVO₂, NaNiO₂, LiRh₂O₄, V₂O₃, V₄O₇, V₆O₁₁, Ti₄O₇, SmBaFe₂O₅, EuBaFe₂O₅, GdBaFe₂O₅, TbBaFe₂O₅, DyBaFe₂O₅, HoBaFe₂O₅, YBaFe₂O₅, PrBaCo₂O_{5.5}, DyBaCo₂O_{5.54}, HoBaCo₂O_{5.48} and YBaCo₂O_{5.49}.

The container 4 is embedded in the powdered heat storage material 3, for example. The substance to be temperature-controlled is accommodated inside the container 4. The substance accommodated in the container 4 may be cells, such as stem cells. Alternatively, the substance accommodated in the container 4 may be a biological sample, such as biological tissue. Also alternatively, the substance accommodated in the container 4 may be a microorganism such as a virus, or a pharmaceutical composition or reagent such as a vaccine, formulation or compound, or a food. The container 4 may also be provided with an identifier such as a two-dimensional barcode or three-dimensional barcode for identification of the contents.

An internal lid 6 may also be situated at the top of the heat storage material 3. The internal lid 6 has an outer diameter that is equal to the inner diameter of the inner case 5, for example. The internal lid 6 is made of an insulating member, for example. The temperature control case further comprises a lid 7. The lid 7 has a vacuum cavity in the interior. The lid 7 is made of a metal such as stainless steel, or of glass. The lid 7 may internally comprise a reflector material to reflect heat. The reflector material is made of copper, for example.

The outer case 1 of the temperature control case may be further provided with suction holes for creation of a vacuum around the periphery of the heat storage material 3 inside the temperature control case, with the lid 7 of the temperature control case in the closed state.

The temperature control case may further comprise one or more temperature sensors that measure the temperature around the periphery of the heat storage material. Arrangement of a plurality of temperature sensors, for example, will allow measurement of temperature unevenness in the heat storage material. The temperature control case may further comprise a memory device that stores the data of the temperature measured by the temperature sensor. The temperature control case may also comprise a wireless transmitter that transmits a warning signal when the temperature measured by the temperature sensor falls outside of a prescribed range. The wireless transmitter may also transmit the measured temperature in real time.

The temperature control case may also comprise a lock mechanism which prevents the lid 7 from being released from the outer case 1 or inner case 5 when the outer case 1 or inner case 5 and the lid 7 are engaged. The temperature control case may further comprise an input device 11 such as a button, and a display 12. The lock mechanism may by unlocked by a password inputted from the input device 11. Alternatively, the lock mechanism may be unlocked by a key or a specialized device.

The temperature control case may further comprise a cooling device that cools the interior of the outer case 1. The cooling device electrically cools the interior of the outer case 1.

The temperature control case may also comprise a Global Positioning System (GPS) position sensor. This will allow the position of the temperature control case to be verified in real time during transport. The temperature control case may also comprise a memory device that stores data for the position at each time point. It may also comprise a wireless transmitter that transmits a warning signal when the transport route measured by the position sensor differs from the prescribed transport route. The wireless transmitter may also transmit the measured position in real time.

The temperature control case may still further comprise a display device that displays a timer or the storage life. The timer measures the time elapsed after the lid 7 has been closed.

It may also comprise a wireless transmitter that transmits a warning signal when the elapsed time measured by the timer exceeds the storage life. The wireless transmitter may also transmit the measured elapsed time in real time.

The temperature control case may still further comprise a motion sensor that detects motion. The temperature control case may still further comprise a memory device that stores data for movement at each time point. It may also comprise a wireless transmitter that transmits a warning signal when the movement measured by the motion sensor exceeds a prescribed threshold value. The wireless transmitter may also transmit the measured movement in real time.

With the temperature control case of this embodiment, it is possible to preserve and transport a substance under controlled temperature at low cost, without using dry ice or liquid nitrogen.

The temperature control case of the embodiment may also be used in combination with a stem cell production system as explained below.

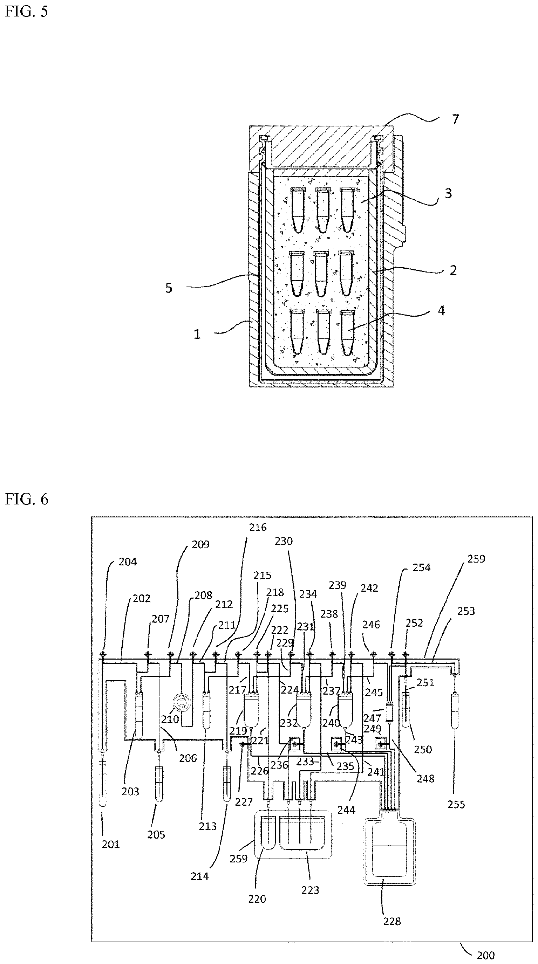

In a stem cell production system according to the embodiment shown in Fig. 6, blood is delivered from the blood storing unit 201 to the mononuclear cell separating unit 203, through a blood solution-feeding channel 202. Tubes, for example, may be used as the blood storing unit 201 and mononuclear cell separating unit 203. The blood solution-feeding channel 202 is a resin tube or silicon tube, for example. This also applies for the other solution-feeding channels described below. An identifier such as a barcode is attached to the blood storing unit 201 for control of the blood information. A pump 204 is used for feeding of the solution.

The pump 204 that is used may be a positive-displacement pump. Examples of positive-displacement pumps include reciprocating pumps including piston pumps, plunger pumps and diaphragm pumps, and rotating pumps including gear pumps, vane pumps and screw pumps. Examples of diaphragm pumps include tubing pumps and piezoelectric pumps. Examples of tubing pumps include Perista Pump^{R} (Atto Corp.) and RP-Q1 and RP-TX (Takasago Electric, Inc.). Examples of piezoelectric pumps include SDMP304, SDP306, SDM320 and APP-20KG (Takasago Electric, Inc.). A microflow chip module (Takasago Electric, Inc.) comprising a combination of various different pumps may also be used. When a sealed pump such as a Perista Pump^{R}, tubing pump or diaphragm pump is used, delivery can be accomplished without direct contact of the pump with the blood inside the blood solution-feeding channel 202. The same also applies to the other pumps described below. Alternatively, syringe pumps may be used for the pump 204, and for the pump 207, pump 216, pump 222, pump 225, pump 234, pump 242 and pump 252 described below. Even pumps other than sealed pumps may be reutilized after heat sterilization treatment.

An erythrocyte coagulant is fed to the mononuclear cell separating unit 203 from the separating agent storing device 205, through a solution-feeding channel 206 and the pump 207. Tubes, for example, may be used as the separating agent storing device 205. An identifier such as a barcode is attached to the separating agent storing device 205 for control of the separating agent information. The erythrocyte coagulant used may be, for example, HetaSep^{R} (STEMCELL Technologies) or an Erythrocyte Coagulant (Nipro Corp.). In the mononuclear cell separating unit 203, the erythrocytes precipitate by the erythrocyte coagulant and the mononuclear cells are separated. The mononuclear cell-containing supernatant in the mononuclear cell separating unit 203 is sent to a mononuclear cell purifying filter 210 through a mononuclear cell solution-feeding channel 208 and pump 209.

At the mononuclear cell purifying filter 210, components other than the mononuclear cells are removed to obtain a mononuclear cell-containing solution. The mononuclear cell purifying filter 210 used may be Purecell^{R} (PALL), Cellsorba E (Asahi Kasei Corp.), SEPACELL PL (Asahi Kasei Corp.), ADACOLUMN^{R} (Jimro), or a separation bag (Nipro Corp.).

In Fig. 6, the mononuclear cell separating unit 203, separating agent storing device 205, mononuclear cell purifying filter 210 and pumps 204, 207, 209 constitute a separating device.

The mononuclear cell-containing solution is sent to a factor introducing device 213 through a preintroduction cell solution-feeding channel 21 1 and pump 212. Tubes, for example, may be used as the factor introducing device 213. Pluripotency inducing factor is fed to the factor introducing device 213 from a factor storing device 214 including pluripotency inducing factor, through a factor solution-feeding channel 215 and the pump 216. Tubes, for example, may be used as the factor storing device 214. An identifier such as a barcode is attached to the factor storing device 214 for control of the pluripotency inducing factor information. The factor storing device 214 and the pump 216 constitute the inducing factor solution-feeding mechanism. In the factor introducing device 213 as the factor introducing device, the pluripotency inducing factor is introduced into cells by RNA lipofection, for example, and inducing factor-introduced cells are prepared. However, the method of transfection of the inducing factor is not limited to RNA lipofection. For example, Sendai virus vector including a pluripotency inducing factor may be used. Alternatively, the pluripotency inducing factor may be a protein.

Alternatively, the factor introducing device 213 may introduce the pluripotency inducing factor into the cells by electroporation. Also alternatively, the factor introducing device 213 may introduce the pluripotency inducing factor into the cells by a viral vector such as a retrovirus, lentivirus or Sendai virus, or by transfection using plasmids, or by protein transfection.

The inducing factor-introduced cells are sent through an introduced cell solution-feeding channel 217 and pump 218 to an initializing culturing vessel 219 as a part of the cell mass preparation device. The introduced cell solution-feeding channel 217 is, for example, temperature-permeable and CO₂-permeable. For the first few days after introduction of the pluripotency inducing factor to the cells, blood cell culture medium is supplied to the initializing culturing vessel 219 from a blood cell culture medium storing unit 220 including blood cell culture medium, through a culture medium solution-feeding channel 221 and pump 222. The culture medium solution-feeding channel 221 is, for example, temperature-permeable and CO₂-permeable. An identifier such as a barcode is attached to the blood cell culture medium storing unit 220 for control of the blood cell culture medium information. The blood cell culture medium storing unit 220, culture medium solution-feeding channel 221 and pump 222 constitute the culture medium supply device. The pump 222 may continuously supply blood cell culture medium, or it may supply blood cell culture medium at a prescribed timing.

Next, stem cell culture medium is supplied to the initializing culturing vessel 219 from a stem cell culture medium storing unit 223 including stem cell culture medium, through a culture medium solution-feeding channel 224 and pump 225. An identifier such as a barcode is attached to the stem cell culture medium storing unit 223 for control of the stem cell culture medium information. The culture medium solution-feeding channel 224 is, for example, temperature-permeable and CO₂-permeable. The stem cell culture medium storing unit 223, culture medium solution-feeding channel 224 and pump 225 constitute the culture medium supply device. The pump 225 may continuously supply stem cell culture medium, or it may supply stem cell culture medium at a prescribed timing.

The blood cell culture medium storing unit 220 and stem cell culture medium storing unit 223 may be placed in cold storage in the cold storage section 259 at a low temperature of 4°C, for example. The culture medium fed from the blood cell culture medium storing unit 220 and the stem cell culture medium storing unit 223 may be fed to the culturing vessel, for example, after having the temperature raised to 37°C with a heater outside the cold storage section 259. Alternatively, the temperature surrounding the solution-feeding channel may be set so that the culture medium stored at low temperature increases in temperature to 37°C while it progresses through the solution-feeding channel. The used culture medium in the initializing culturing vessel 219 is sent to a waste liquid storage section 228 through a waste liquid solution-feeding channel 226 and pump 227. An identifier such as a barcode is attached to the waste liquid storage section 228 for control of the waste liquid information.

The cell masses that have been cultured at the initializing culturing vessel 219 are sent to a first amplifying culturing vessel 232 as a part of the cell mass preparation device, through an introduced cell solution-feeding channel 229, pump 230 and cell mass dissociater 231. By passing through the cell mass dissociater 231, the cell masses are dissociated into smaller cell masses. Stem cell culture medium is supplied to the first amplifying culturing vessel 232 from the stem cell culture medium storing unit 223 including stem cell culture medium, through a culture medium solution-feeding channel 233 and pump 234. The introduced cell solution-feeding channel 229 and culture medium solution-feeding channel 233 are, for example, temperature-permeable and CO₂-permeable. The stem cell culture medium storing unit 223, culture medium solution-feeding channel 233 and pump 234 constitute the culture medium supply device. The pump 234 may continuously supply stem cell culture medium, or it may supply stem cell culture medium at a prescribed timing.

The used culture medium in the first amplifying culturing vessel 232 is sent to the waste liquid storage section 228 through a waste liquid solution-feeding channel 235 and pump 236.

The cell masses that have been cultured at the first amplifying culturing vessel 232 are sent to a second amplifying culturing vessel 240 as a part of the cell mass preparation device, through an introduced cell solution-feeding channel 237, pump 238 and cell mass dissociater 239. By passing through the cell mass dissociater 239, the cell masses are dissociated into smaller cell masses. Stem cell culture medium is supplied to the second amplifying culturing vessel 240 from the stem cell culture medium storing unit 223 including stem cell culture medium, through a culture medium solution-feeding channel 241 and pump 242. The introduced cell solution-feeding channel 237 and culture medium solution-feeding channel 241 are, for example, temperature-permeable and CO₂-permeable. The stem cell culture medium storing unit 223, culture medium solution-feeding channel 241 and pump 242 constitute the culture medium supply device. The pump 242 may continuously supply stem cell culture medium, or it may supply stem cell culture medium at a prescribed timing.

The used culture medium in the second amplifying culturing vessel 240 is sent to the waste liquid storage section 228 through a waste liquid solution-feeding channel 243 and pump 244.

The cell masses that have been cultured in the second amplifying culturing vessel 240 are sent to a solution exchanger 247 through an introduced cell solution-feeding channel 245 and pump 246. In the solution exchanger 247, the cell masses are held at a filter while the culture medium is sent to the waste liquid storage section 228 through a waste liquid solution-feeding channel 248 and pump 249.

After stopping flow of the solution in the waste liquid solution-feeding channel 248 by stopping driving of the pump 249, or after closing the waste liquid solution-feeding channel 248 with a valve or the like, cryopreservation liquid is placed in the solution exchanger 247 from a cryopreservation liquid storing device 250 that includes cryopreservation liquid, through a solution-feeding channel 251 and pump 252. This disperses the cell masses in the cryopreservation liquid.

The cryopreservation liquid that has dispersed the cell masses is fed into the container of the temperature control case 255 of this embodiment, through a solution-feeding channel 253 and pump 254, as parts of the packaging apparatus. The cell masses are frozen in the container. After freezing, the temperature control case 255 is transported, for example.

The above explanation assumes an example in which induced stem cells are fed into the container of the temperature control case 255 of this embodiment. However, induced differentiated somatic cells may instead be fed into the container of the temperature control case 255 of the embodiment.

In this case, the system shown in Fig. 6 functions as a somatic cell production system by the following modifications.

A somatic cell inducing factor is fed to the factor introducing device 213 from a factor storing device 214, through the factor solution-feeding channel 215 and the pump 216. The somatic cell inducing factor is a factor for differentiation of cells to a specific target somatic cell.

The culturing vessel 219 functions as a somatic cell culturing vessel 219. The culture medium preserving unit 220 functions as a cell culture medium storing unit 220. The culture medium storing unit 223 functions as a somatic cell culture medium storing unit 223.

For the first few days after introduction of the somatic cell inducing factor to the cells, drug-containing cell culture medium is supplied to the somatic cell culturing vessel 219 from the cell culture medium storing unit 220 including drug-containing cell culture medium, through the culture medium solution-feeding channel 221 and pump 222. The drug-containing cell culture medium includes a drug that kills cells into which the drug resistance gene has not been introduced. Next, somatic cell culture medium is supplied to the somatic cell culturing vessel 219, from a somatic cell culture medium storing unit 223 including somatic cell culture medium suited for the target somatic cells, through the culture medium solution-feeding channel 224 and pump 225.

The somatic cells that have been cultured with the somatic cell culturing vessel 219 are sent to a first amplifying culturing vessel 232 as a part of the cell preparation device, through the introduced cell solution-feeding channel 229, pump 230 and optionally the cell mass dissociater 231. By passing through the cell mass dissociater 231, the cell masses are dissociated into smaller cell masses. The cell mass dissociater 231 may be omitted if cell masses have not formed. Somatic cell culture medium is supplied to the first amplifying culturing vessel 232 from the somatic cell culture medium storing unit 223 including the somatic cell culture medium, through the culture medium solution-feeding channel 233 and pump 234.

The somatic cells that have been cultured at the first amplifying culturing vessel 232 are sent to a second amplifying culturing vessel 240 as a part of the cell preparation device, through an introduced cell solution-feeding channel 237, pump 238 and optionally the cell mass dissociater 239. By passing through the cell mass dissociater 239, the cell masses are dissociated into smaller cell masses. The cell mass dissociater 239 may be omitted if cell masses have not formed. Somatic cell culture medium is supplied to the second amplifying culturing vessel 240 from the somatic cell culture medium storing unit 223 including the somatic cell culture medium, through the culture medium solution-feeding channel 241 and pump 242.

The somatic cells that have been cultured in the second amplifying culturing vessel 240 are sent to a solution exchanger 247 through the introduced cell solution-feeding channel 245 and pump 246. The solution exchanger 247 comprises the construction shown in Fig. 6, for example. In the solution exchanger 247 shown in Fig. 7, the somatic cells are held at a filter while the culture medium is sent to the waste liquid storage section 228 through the waste liquid solution-feeding channel 248 and pump 249.

After stopping flow of the solution in the waste liquid solution-feeding channel 248 by stopping driving of the pump 249, or after closing the waste liquid solution-feeding channel 248 with a valve or the like, cryopreservation liquid is placed in the solution exchanger 247 from a cryopreservation liquid storing device 250 that includes cryopreservation liquid, through a solution-feeding channel 251 and pump 252. This disperses the somatic cells in the cryopreservation liquid.

The cryopreservation liquid that has dispersed the somatic cells is fed into the container of the temperature control case 255 of this embodiment, through the solution-feeding channel 253 and pump 254, as parts of the packaging apparatus. The somatic cells are frozen in the container. After freezing, the temperature control case 255 is transported, for example.

### REFERENCE SIGNS LIST

1: Outer case, 1: outer case, 2: heat-insulating material, 3: heat storage material, 4: container, 5: inner case, 6: internal lid, 7: lid, 11: input device, 12: display, 201: blood storing unit, 202: blood solution-feeding channel, 203: mononuclear cell separating unit, 204: pump, 205: separating agent storing device, 206: solution-feeding channel, 207: pump, 208: mononuclear cell solution-feeding channel, 209: pump, 210: mononuclear cell purifying filter, 211: preintroduction cell solution-feeding channel, 212: pump, 213: factor introducing device, 214: factor storing device, 215: factor solution-feeding channel, 216: pump, 217: introduced cell solution-feeding channel, 218: pump, 219: initializing culturing vessel, 220: blood cell culture medium storing unit, 221: culture medium solution-feeding channel, 222: pump, 223: stem cell culture medium storing unit, 224: culture medium solution-feeding channel, 225: pump, 226: waste liquid solution-feeding channel, 227: pump, 228: waste liquid storage section, 229: introduced cell solution-feeding channel, 230: pump, 231: cell mass dissociater, 232: amplifying culturing vessel, 233: culture medium solution-feeding channel, 234: pump, 235: waste liquid solution-feeding channel, 236: pump, 237: introduced cell solution-feeding channel, 238: pump, 239: cell mass dissociater, 240: amplifying culturing vessel, 241: culture medium solution-feeding channel, 242: pump, 243: waste liquid solution-feeding channel, 244: pump, 245: introduced cell solution-feeding channel, 246: pump, 247: solution exchanger, 248: waste liquid solution-feeding channel, 249: pump, 250: cryopreservation liquid storing device, 251: solution-feeding channel, 252: pump, 253: solution-feeding channel, 254: pump, 255: temperature control case, 259: cold storage section.

## Claims

1. A temperature control case comprising
an outer case,
a heat-insulating material disposed inside the outer case, and
a heat storage material disposed inside the heat-insulating material, the heat storage material having a container disposed inside it.

2. The temperature control case according to claim 1, which further comprises an inner case disposed between the outer case and the heat-insulating material.

3. The temperature control case according to claim 1 or 2, wherein the heat storage material includes a latent heat storage material.

4. The temperature control case according to any one of claims 1 to 3, wherein the heat storage material includes a substance that undergoes electronic phase transition.

5. The temperature control case according to any one of claims 1 to 4, wherein the heat storage material includes a vanadium dioxide-based substance.

6. The temperature control case according to any one of claims 1 to 4, wherein the heat storage material includes one or more substances selected from the group consisting of V_{(1-X)}W_{X}O₂ (0 ≤ X ≤ 0.0650), V_{(1-X)}Ta_{X}O₂ (0 ≤ X ≤ 0.117), V_{(1-X})Nb_{X}O₂ (0 ≤ X ≤ 0.115), V_{(1-X)}Ru_{X}O₂ (0 ≤ X ≤ 0.150), V_{(1-X)}Mo_{X}O₂ (0 ≤ X ≤ 0.161), V_{(1-X)}Re_{X}O₂ (0 ≤ X ≤ 0.0964), LiMn₂O₄, LiVS₂, LiVO₂, NaNiO₂, LiRh₂O₄, V₂O₃, V₄O₇, V₆O₁₁, Ti₄O₇, SmBaFe₂O₅, EuBaFe₂O₅, GdBaFe₂O₅, TbBaFe₂O₅, DyBaFe₂O₅, HoBaFe₂O₅, YBaFe₂O₅, PrBaCo₂O_{5.5}, DyBaCo₂O_{5.54}, HoBaCo₂O_{5.48} and YBaCo₂O_{5.49}.

7. The temperature control case according to any one of claims 1 to 6, which further comprises a lid that seals shut the interior of the outer case.

8. The temperature control case according to claim 7, which further comprises a lock mechanism that prevents opening of the lid.

9. The temperature control case according to claim 8, which further comprises an input device for unlocking of the lock mechanism.

10. The temperature control case according to any one of claims 1 to 9, which is further provided with suction holes for creation of a vacuum around the periphery of the heat storage material.

11. The temperature control case according to any one of claims 1 to 10, which further comprises a temperature sensor that measures the temperature around the periphery of the heat storage material.

12. The temperature control case according to claim 11, which further comprises a display device that displays the temperature.

13. The temperature control case according to any one of claims 1 to 11, which further comprises a display device that displays a timer.

14. The temperature control case according to any one of claims 1 to 11, which further comprises a display device that displays the storage life.

15. The temperature control case according to any one of claims 1 to 14, which further comprises a position sensor.

16. The temperature control case according to any one of claims 1 to 15, which further comprises a motion sensor.

17. The temperature control case according to any one of claims 1 to 15, wherein cells are stored in the container.

18. The temperature control case according to any one of claims 1 to 15, wherein stem cells are stored in the container.

19. A stem cell production system comprising
a preintroduction cell solution-feeding channel through which a cell-containing solution passes,
a factor introducing device that is connected to the preintroduction cell solution-feeding channel and introduces a pluripotency inducing factor to cells to prepare inducing factor-introduced cells,
a cell mass preparation device that cultures the inducing factor-introduced cells to prepare a plurality of cell masses composed of stem cells, and
a packaging apparatus that introduces the cell masses into a temperature control case according to any one of claims 1 to 18.

20. A somatic cell production system comprising
a preintroduction cell solution-feeding channel through which a preintroduction cell-containing solution passes,
a factor introducing device that is connected to the preintroduction cell solution-feeding channel and introduces a somatic cell inducing factor into preintroduction cells to prepare inducing factor-introduced cells,
a cell preparation device that cultures the inducing factor-introduced cells to prepare somatic cells, and
a packaging apparatus that introduces the somatic cells into a temperature control case according to any one of claims 1 to 18.
